# EUROPEAN PATENT APPLICATION

(11) **EP 4 205 527 A1**
(43) Date of publication of application: **05.07.2023**
(21) Application number: 22213232.6
(22) Date of filing: 13.12.2022
(51) Int. Cl.: A01D 41/127, A01F 12/44

(54) **SYSTEM FOR DETECTING A CONDITION INDICATIVE OF PLUGGING OF AN AGRICULTURAL COMBINE**

(30) Priority: 29.12.2021 US 202117564704
(71) Applicant: CNH Industrial Belgium NV, 8210 Zedelgem (BE)
(72) Inventor: ISAAC, Nathan E., New Holland, 17557 (US)
(74) Representative: CNH Industrial IP Department

(57) **Abstract**

An agricultural combine (20) comprises: a body (22) having a plurality of interconnected walls defining a space (24) for receiving a stream of chaff from a separating system (38) of the combine (20); a cleaning system (52) disposed either in or beneath the space (24), the cleaning system (52) including a sieve (56) mounted to a shoe (59); and one or more air pressure sensors (100) fixedly mounted to the shoe (59), the one or more air pressure sensors (100) operable for sensing an air pressure condition in the space (24) and across the sieve (56).

## Description

### FIELD OF THE INVENTION

The present invention relates generally to a system and method for detecting a condition indicative of plugging of a path for discharging crop residue from an agricultural combine, and more particularly, for detecting a condition indicative of the onset of plugging, to allow avoiding occurrence of actual plugging and the requirement of removing the plug.

### BACKGROUND OF THE INVENTION

As is described in U.S. Patent No. 7,381,130 (the '130 Patent), agricultural combines are well known in the art for harvesting and threshing various agricultural crops, including for example, wheat, soybeans, corn, etc. Usually, agricultural combines include a harvesting apparatus, an infeed mechanism, a separating apparatus and a cleaning apparatus. In operation, the harvesting apparatus reaps the crop, which is planted in the ground. After reaping, the infeed mechanism feeds the crop to the separating apparatus.

Typically, the separating apparatus in a rotary combine includes at least one rotor, which can extend axially (front to rear) or transversely within the body of the combine, and which is surrounded at least in part by a perforated concave having a plurality of apertures. The grain is threshed and separated by the separating apparatus, and the separated grain, together with some impurities, such as chaff, dust, and crop residue particles, are fed to a cleaning system to clean the impurities from the grain. Clean grain is collected below the cleaning system and fed to a grain tank for temporary storage. The clean grain, impurities and smaller elements and particles of the crop residue are separated from the bulk of the crop residue by the separating apparatus and the resulting residue is delivered for processing by a discharge delivery system.

While the terms "grain" and "crop residue" are used principally throughout this specification for convenience, it should be understood that these terms are not intended to be limiting. Thus "grain" refers to that part of the crop which is threshed and separated from the discardable part of the crop material (e.g. straw), which is referred to as "crop residue."

The harvesting and threshing systems of modern combines can at times produce volumes of crop residue material that can exceed the capacity of the discharge systems, leading to plugging thereof and packing of crop residue thereagainst and over the cleaning system, which can require substantial down time and effort to remove. In some instances, the only warning of plugging is when an operator notices that crop residue is no longer being discharged or is being discharged at a rate which appears to be too low or the pattern of discharge is incorrect. Therefore, it would be advantageous if accurate early warning or information indicative of a plugging condition, or onset of a plugging condition, were provided, to allow an operator or automatic control to take steps to avoid plugging, or shut down the machine for removing the plug and/or cleaning, before significant down time and effort is required to do so.

As an additional problem, if crop residue falls short of the rear of the combine, blockages and interference with and reduction in the effectiveness in the operation of the chaff handling system of the combine can occur, thereby also resulting in combine down time and decreases in harvesting productivity. Therefore, it would be advantageous to avoid this problem also.

Accordingly, what is sought is a system or method for detecting a plugging of a crop residue discharge of a combine which provides one or more advantages, and overcomes one or more problems, set forth above.

### SUMMARY OF THE INVENTION

With this invention, a system and method for detecting a condition indicative of onset of plugging or actual plugging of a discharge of an agricultural combine, which provides one or more of the advantages, and overcomes one or more problems, set forth above, is disclosed.

According to one aspect of the invention, an agricultural combine comprises: a body having a plurality of interconnected walls defining a space for receiving a stream of chaff from a separating system of the combine; a cleaning system disposed either in or beneath the space, the cleaning system including a sieve mounted to a shoe; and one or more air pressure sensors fixedly mounted to the shoe, the one or more air pressure sensors operable for sensing an air pressure condition in the space and across the sieve.

According to another aspect of the invention, an agricultural combine further comprises: two air pressure sensors fixedly mounted to the shoe, the air pressure sensors operable for sensing an air pressure condition in the space as well as across the sieve, wherein one of the two air pressure sensors is positioned at an elevation above the sieve and the other of the two air pressure sensors is positioned at an elevation below the sieve; a weed seed mill having an inlet positioned in the space for receiving a flow of crop residue from the cleaning system; and a control that is configured to compare pressure readings from the two air pressure sensors to determine (i) either the presence or absence of a blockage at the sieve based upon the pressure readings from the two air pressure sensors, and (ii) the presence or absence of a blockage in the space at a location downstream of the cleaning system.

Further aspects of the invention are described hereinafter.

### BRIEF DESCRIPTION OF THE DRAWING FIGURES

These and other advantages of the present invention are best understood with reference to the drawings, in which:
FIG. 1 is a side view of an agricultural combine including a system according to the invention for detecting plugging of a discharge of the combine;
FIG. 2 is a simplified schematic representation of a separating system and a cleaning system of the combine in association with the system of the invention, showing flows in relation thereto;
FIG. 3 is simplified schematic representation of aspects of a system of the invention;
FIG. 4 is a fragmentary sectional view of a side sheet of a cleaning shoe of the combine and an air pressure sensor of the invention mounted therethrough; and
FIG. 5 is another simplified schematic representation of the separating system and the cleaning system of the combine in association with the system of the invention, showing plugging in a discharge region and resultant changes in flows through the combine.

### DETAILED DESCRIPTION OF THE INVENTION

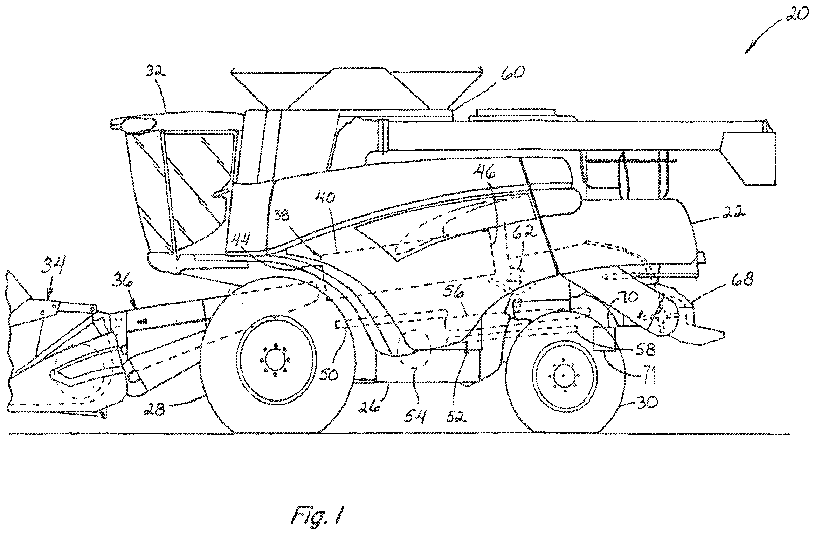

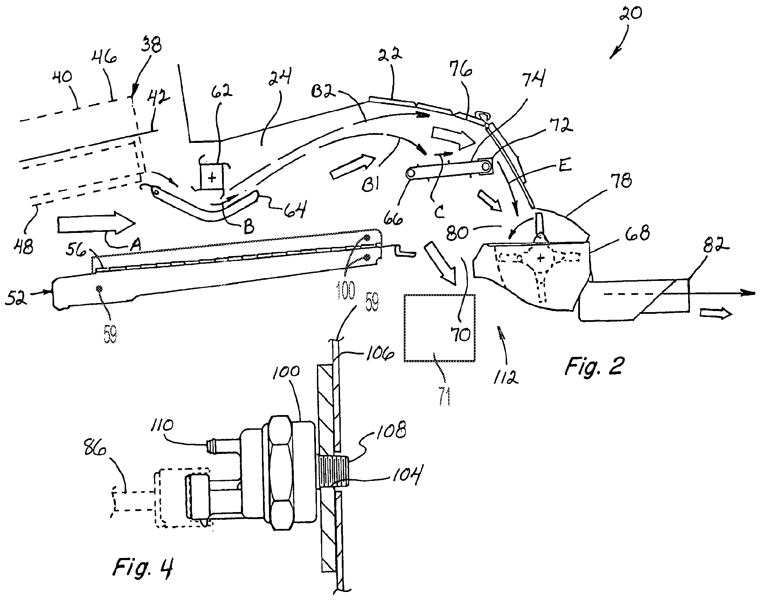

Referring to the drawings, FIGS. 1 and 2 show a self-propelled rotary combine 20 that includes a housing or body 22 formed by interconnected walls and defining an internal open area or space 24. While a conventional rotary combine is shown, it is anticipated that the present invention could be used with any type of combine, such as a conventional combine having a threshing cylinder and separation beaters (not shown) or a hybrid combine having a threshing cylinder and rotors (not shown). However, for ease of explanation, the present invention will be discussed hereinafter in conjunction with a self-propelled rotary combine 20 as illustrated by FIGS. 1 and 2.

The body 22 of the combine 20, which can include a supporting frame 26 having interconnected walls, is supported on front drive wheels 28 and rear wheels 30. The combine 20 is powered by an engine (not shown) and controlled from an operator's station (or cab) 32.

A crop harvesting apparatus, otherwise referred to as a header 34, and an infeed mechanism 36, otherwise referred to as a feeder 36, are attached at a forward end of the combine 20. The infeed mechanism 36 feeds crop materials to a separating system 38 enclosed within the body. As best shown in FIG. 2, the separating system 38 is a single axial unit that threshes and separates crop materials presented thereto into grain and other materials. However, it should be appreciated that the rotary combine 20 could be configured with more than one separating system 38, for example, with two units arranged in a parallel configuration. The separating system 38 is mounted in the internal space 24 defined by interconnected walls of the body 22.

The separating system 38 includes a rotor 40 with a longitudinal extent rotatably mounted to the body 22 about a longitudinal axis of rotation 42. It should be understood that the term "longitudinal" means of or relating to length or the lengthwise dimension. It should also be understood that the rotor 40, with its longitudinal extent, could be mounted within the body 22 so as to extend laterally from side-to-side within the combine 20.

It should be understood that the terms "left side," "right side," "left," "right," "front," "rear," "upper," "lower," "top," and "bottom," and their derivatives, as used herein, are intended to indicate directions relative to the views presented in the figures and in particular, when viewing the rotary combine 20 of FIG. 1, and the internal components thereof.

Between the upstream, or front end 44, and the downstream, or rear end 46, of separating system 38, the crop material is threshed as it spirals around rotor 40 against a concave 48 disposed at least partially, circumferentially around rotor 40. Concave 48 has a plurality of apertures that allow the grain to be separated from the other crop material as the grain passes through the apertures. Most of the grain drops onto a grain pan 50 positioned beneath rotor 40. The grain is thereafter conveyed from the grain pan 50 by an auger or other suitable mechanism (not shown) for subsequent cleaning and collection by a cleaning system 52 of combine 20.

The cleaning system 52 cleans crop residue, chaff, tailings and other foreign material from the grain. Cleaning system 52 includes a cleaning fan 54, a chaffer sieve 56, a grain sieve 58, and a clean grain collector therebelow (not shown). Sieves 56 and 58 are either mounted to different shoes (i.e., frames) or the same shoe. In this embodiment, sieve 56 is mounted to shoe 59. Shoe 59 is connected to a linkage (not shown) that oscillates (i.e., moves) shoe 59 in a fore-to-aft manner. The cleaning fan 54 directs a flow of air, denoted by large arrow A, upward and rearwardly through sieves 56 and 58, and rearwardly, for blowing the chaff and other particles from the grain. A suitable auger mechanism (also not shown) can direct clean grain from the clean grain collector into a hopper or grain bin 60.

Turning back to the details of separating system 38, crop residue and other waste crop material are impelled rearwardly out of rear end 46 of separating system 38 by a rotary beater 62 which rotates, as denoted by arrow B to "throw" or propel, as denoted by arrows B1 and B2, an airborne flow of crop residue and other waste material, particularly straw, through the space 24 rearwardly toward the rear end of the space 24 and the combine 20. The beater 62 is preferably positioned above a beater pan 64 to facilitate this function. Such airborne flow of the crop residue will typically comprise elements of varying size, mass and other characteristics that will influence the distance that the elements of the crop residue will be thrown or propelled through the space 24, and also the propensity for plugging.

To overcome the problem of short falling crop residue, and also plugging, combine 20 further preferably includes an optional conveying mechanism 66. Conveying mechanism 66 is preferably mounted to the body of the combine 20 in a position such as that shown, in spanning relation to a portion of space 24 just below, or in a lower region of, a path of the rearward flow generated by beater 62, denoted by the arrows B1 and B2. Advantageously, conveying mechanism 66 will be positioned in the path of elements of the crop residue flow B, B1 and B2 that would fall short of a desired destination therefor, such as a rearwardly located chopper 68 or an outlet opening, and so as to prevent or limit occurrences of problems including blocking and interfering with the operation of other systems. At the position shown, the front end of the conveying mechanism 66 is located above at least a rear end of a lower rear opening 70, which coincides with a location of most anticipated short falls of crop residue flow B, B1 and B2.

The conveying mechanism 66 can be optionally mounted for pivotal movement in an upward and downward direction, for operation in an alternative position, desired or required for a particular application.

The conveying mechanism 66 includes a conveyor drive 72, which can be, for instance, a well-known, commercially available hydraulic motor, an electric motor, etc., drivingly rotatable for continuously moving an upwardly facing conveyor surface 74 of conveying mechanism 66 in the rearward direction, as denoted by arrow C. Conveyor surface 74 is preferably a surface of an endless belt, chain or the like which encircles rollers at the opposite ends of conveying mechanism 66, and can have a generally smooth surface, or a textured surface, or include raised elements thereon, as desired or required for a particular application. The conveyor drive 72 is shown connected in driving relation to one of the rollers for moving conveyor surface 74 in the well-known manner.

The conveying mechanism 66 can additionally be optionally rotatable by drive 72 at variable speeds, either under manual control, or automatically responsive to and in adjustment for different characteristics of the crop residue being received and/or other conditions, as represented by one or more predetermined parameters. This can include an indication of an onset of a plugging condition involving mechanism 66. Generally, the conveying mechanism 66 is bounded on its upper side by a crop residue hood ceiling 76, which prevents crop residue from escaping upward. The conveying mechanism 66 cooperates with crop residue hood ceiling 76 for merging portions of, shaping, and regulating crop residue flow B, B1 and B2, as will also be explained. Hood ceiling 76 can also be opened, for configuring to allow outflow of crop residue for windrowing.

Located generally below the conveying mechanism 66 can be other optional crop residue processing mechanisms. For example, crop residue chopper 68 and weed seed mill 71.

It is contemplated that the chopper 68 can be any conventional chopper currently known in the art or any improved version thereof, for chopping and/or spreading crop residue. Regardless, it is preferred that the chopper 68 include a chopper housing 78 having an inlet opening 80 for receipt of crop residue, such as straw. Located rearward of the chopper 68 is a chopper spreader band or guide 82, for directing the crop residue discharged from chopper 68 in a desired manner over a field, and when windrowing, for guiding crop residue ejected from open hood ceiling onto a field therebelow.

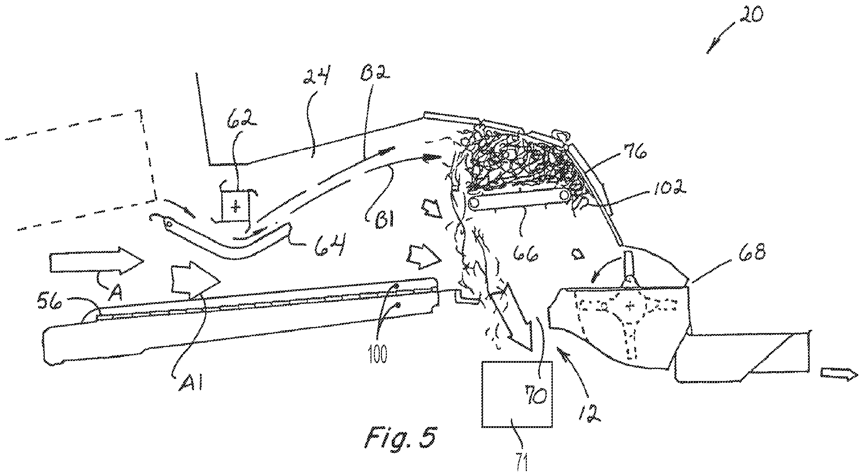

As shown in FIGs. 2 and 5, an impact seed mill 71 is positioned near opening 70 at a location that is upstream of chopper 68. Seed mill 71 comprises a rotor and concave that are together configured for preventing germination of weed seeds processed by seed mill 71. The processed weed seeds may be distributed onto the ground or directed to chopper 68. Further details in connection with weed seed mill 71 are described in U.S. Patent No. 10,314,232 and U.S. Patent App. No. 17/462,657 to Case New Holland, which are each incorporated by reference herein in their entirety and for all purposes.

Seed mill 71 may be prone to plugging or blockages due to the tight clearances of the processing impeller (or rotor) or small inlet area to the rotor of mill 71. These items are needed to ensure the processing capability of the chaff flow from the cleaning system 52 of the combine, but pose a risk to blockages in tough, wet crop conditions, such as rice, soybeans, or field peas. These blockages should be detected to notify the operator of combine 20 in order to avoid downtime cleaning out the combine or repairing failed parts due to the blockage.

FIG. 2 shows the conveying mechanism 66 mounted adjacent to and in spaced relation below, the crop residue hood ceiling 76 of the combine. As illustrated, it is contemplated that the discharge beater 62 will throw or propel a flow of crop residue rearwardly, denoted by arrows B1 and B2, such that some or all of the crop residue, particularly larger elements and wads thereof, represented by arrow B1, will fall or land upon the conveying mechanism 66, and more particularly, on conveyor surface 74, which is moving rearwardly as denoted by arrow C. The moving surface 74 will carry the crop residue deposited thereon rearwardly so as to effectively be merged or mixed with the still airborne crop residue flow B2, which is at the same time being guided downwardly by the hood ceiling 76, so as to reduce the overall vertical extent of the crop residue flows B1 and B2, so as to be more uniform and consistent. The rearward powered movement of surface 74 of conveying mechanism 66 thus facilitates the collection and consolidation or funneling of the crop residue discharge, and positively delivers it, to the chopper 68, as denoted by arrow E. In this regard, it should be appreciated that elements of the crop residue flow B1 that fall onto conveyor surface 74 will often have little or no useful remaining rearward velocity or momentum, and thus will be accelerated and positively propelled rearwardly to the rear end of the conveyor surface 74 and be combined with flow B2. The rearward movement of and energy imparted to the thus conveyed crop residue of flow B1 will facilitate the merging and mixing thereof with the still airborne portions of the crop residue flow B2, and also the smooth feeding of the combined and merged crop residue flow E into the chopper 68. In this latter regard, the reduced or controlled vertical extent of the combined crop flows B1 and B2 facilitate more uniform, controlled and concentrated entry and feeding of the crop flow E at a desired angle and location into inlet opening 80 of the chopper 68. And, in the event of receipt of a particularly large volume or wad of crop material, the combination of the powered conveying mechanism 66 positively driving the crop material rearwardly and the reducing of the vertical extent thereof will have the effect of throttling and funneling the crop material into the chopper 68 so as to regulate the flow of the crop material inducted therein and reduce the occurrence of induction of wads and large volumes that can overload the chopper and cause problems such as excessive drive belt slippage and resultant wear.

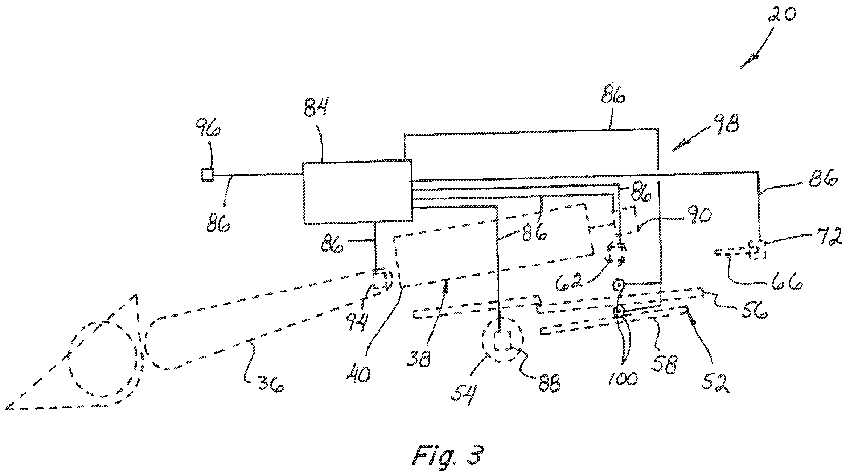

Here, it should be noted that the conveyor surface 74 of the conveying mechanism 66 can additionally be optionally automatically moved in a different opposite direction D by drive 72, and at variable speeds, either under manual control using a suitable input device in operator's station 32 or elsewhere, or automatically, responsive to and in adjustment for different characteristics of the crop residue being received and/or other conditions, as represented by one or more predetermined parameters. Such parameters can include, for instance, but are not limited to, parameters sensed or determined by an element or elements of the header 34, the infeed mechanism 36, the separating system 38, and/or the cleaning system 52, and/or sensors associated with the conveying mechanism 66, such as a load sensor (not shown) associated with surface 74 for sensing a load thereon, or a contact switch (not shown) disposed above the surface 74 which will make or break an electrical circuit responsive to contact with a mass of crop residue or straw being conveyed by the surface 74 or being fed into one of the processing devices such as the chopper 68, or rearwardly from the combine. The speed can be controlled by a processor based control, such as a control 84 (FIG. 3), which can be connected to the drive 72 by a suitable conductive path, such as wire 86 shown. By such control the conveyor surface 74 can be sped up or slowed down, as required or desired to regulate crop residue flow into the chopper 68 for optimizing output therefrom and for regulating the characteristics, such as consistency, cohesiveness and the like, of a windrow (not shown).

Referring also to FIG. 3, a schematic representation of a preferred processor based control 84 for combine 20, is shown. More particularly, control 84 is connected by a connective path 86 to a cleaning fan drive 88 controllably operable for rotating cleaning fan 54 at a desired or required speed determinable by drive 88. Control 84 is also connected to a rotor drive 90 by a conductive path 86, drive 90 being controllably operable for drivingly rotating rotor 40 of separating system 38 and determining a speed thereof. Control 84 is connected by a conductive path 86 to a beater drive controllably operable for rotating beater 62 and determining a rotational speed thereof. Similarly, control 84 is connected by a conductive path 86 to a feeder drive 94 of infeed mechanism 36 for controlling and determining an operating speed thereof. An output device 96 is connected by conductive path 86 to control 84, and is operable for displaying and/or signaling conditions as determined by control 84.

Control 84, and the various aspects thereof, just discussed, importantly comprise elements of a system 98 for detecting a condition indicative of onset of or actual plugging of a discharge path for crop residue from combine 20, constructed and operable according to the teachings of the present invention. System 98, importantly, includes one or more sensors 100 disposed on or near the rearward end of shoe 59 so as to be operable for sensing a condition therein which is indicative of a reduced crop residue flow condition toward the rear end of space 24, which reduced crop residue flow condition can include, but is not limited to, a partial or complete plugging or blocking of the rear region of space 24, as illustrated by crop residue plug 102 between conveying mechanism 66 and hood ceiling 76 in FIG. 5. Sensors 100 are also operable for sensing a condition therein which is indicative of a reduced crop residue flow condition across sieve 56.

Sensor 100 may be a digital air pressure sensor. Alternatively, referring now to FIGS. 4 and 5, sensor 100 may be an air pressure sensor which can be, for instance, a commercially available differential pressure transducer available from Kavlico, of Moorpark, Calif. USA, operable for sensing and detecting changes and variances in air pressure. Sensor 100 may be a model threadedly mountable in a hole 104 in a side wall or sheet 106 of shoe 59. Sensor 100 may be of at least generally well known construction including a port 108 in connection with space 24, and another port 110 in connection with another location, such as ambient conditions on the exterior of combine 20, and is operable for sensing and detecting differences in pressure in respective ports 108 and 110, and outputting a signal representative thereof over a suitable conductive path, such as a wire 86 in connection with control 84, as illustrated in FIG. 3. Since sensor 100 is fixed to shoe 59, which is movable, sensor 100 may also communicate with control 84 via a wireless connection.

It is desirable for sensor 100 to be operable for detecting conditions, particularly air pressure conditions, and more particularly, static air pressure conditions, in a region of sieve 56. It is also desirable for sensor 100 to be operable for detecting those conditions in a region of space 24 of combine 20 which will be indicative of the onset of, or actual, plugging of all, or a portion of, a discharge of combine 20, generally denoted by region 112 in FIGS. 2 and 5. More particularly, discharge 112 can include, the region between conveying mechanism 66 and hood ceiling 76, the inlet opening 80 of chopper 68, and/or lower rear opening 70, as well as any other aspect of combine 20 involving discharge of crop residue therefrom involving outflows of crop material from separating system 38 and/or cleaning system 52. Weed seed mill 71, which is an optional component of combine 20, is positioned at discharge 112 for receiving a crop residue stream.

As one preferred location for sensor 100, it has been found that pressure conditions of air flow A generated by cleaning fan 54 and directed through and over chaffer sieve 56 toward the rear end of space 24 will be increased by the onset of, and actual, plugging of one or more regions of discharge 12, such as, but not limited to, the region between conveying mechanism 66 and hood 76, as illustrated by plug 102 in FIG. 5, even though such plug 102 is located virtually at the opposite end of space 24 within the combine. It has been further found that in the region of space 24 between chaffer sieve 56 and beater pan 64, static air pressure conditions can be sensed which will be indicative of conditions elsewhere in space 24, particularly in discharge 112, and it has been concluded that sensing of such air flow conditions at such location, as illustrated by the location of sensor 100 in FIGS. 2 and 5, is highly advantageous for monitoring operating conditions in discharge 112. As another advantage, the region of space 24 at chaffer sieve 56 is less subject to blockage or plugging, such that reliability of operation is enhanced.

Referring particularly to FIG. 5, a plug 102 can virtually fill the space between conveying mechanism 66 and hood ceiling 76, without resulting in any plugging or significant buildup of crop material in the vicinity of sensor 100 when located as shown. However, it has been found that the existence of a plug, such as plug 102, which partially or completely blocks the pathways for discharge of air from space 24, will result in an increase in static air pressure in the vicinity of sensor 100, as illustrated by large arrow A1. This increase in pressure will be detected by sensor 100 and information relating thereto outputted by sensor 100 to control 84 of system 98 (FIG. 3). Control 84, in turn, is operable, for instance, to compare the information to stored values corresponding to other parameters, such as a speed of cleaning fan 54, to determine the existence of a plug, such as plug 102, or the onset of the formation thereof. An advantage of utilizing sensed air pressure in the above-described manner, is that the pressure can be incrementally determined, and, for instance, an upward trend detected, which may be determined to be indicative of the onset of a plugging condition.

The position of sensors 100 is tailored for detecting the air pressure of the cleaning system 52 as well as monitoring the amount of air produced by fan 54 that is able to pass through the sieves 56 and 58. The placement of sensor 100 on the shoe 59 is particularly advantageous in that the measurement needed to be accomplished is as close to sieves 56 and 58 as possible to avoid other disturbances. Sensor 100 is also placed in the vicinity of seed mill 71 for detecting a blockage at discharge 112 and seed mill 71.

Multiple sensors 100 are mounted to shoe 59, as shown. One sensor 100 is mounted to shoe 59 at a location above sieve 56, and another sensor 100 is positioned below sieve 59. Using two sensors facilitates differential pressure measurements across the sieve 56, which can be helpful to identify a blockage or plug residing on sieve 56. If sieve 56 is plugged, then sensors 100 will have significantly different air pressure readings. Alternatively, if both sensors 100 have high pressure readings, then the plugging condition will be located downstream of sieve 56 at a location in space 24 at or near seed mill 71, discharge 112, chopper 68 and/or conveying mechanism 66, for example.

Sensors 100 may be positioned on the interior facing surfaces of shoe 59 (i.e., the surfaces of shoe facing sieve 56). Thus, the location of sensors 100 is useful in identifying blockages on sieve 56, at seed mill 71 and generally in the space 24. The position of sensors 100 is therefore different than the mounting on the side-wall of the frame in the '130 Patent, which is inherently further away from the sieve 56 and seed mill 71.

Other parameters or conditions can also be factored, including, but not limited to, load on and/or speed of conveying mechanism 66; speed of beater 62; speed of rotor 40; speed of rotor of seed mill 71; and/or speed of infeed mechanism 36. Once the existence of the onset of, or an actual plugging condition, is determined, control 84 can be programmed to output a signal representative thereof, for instance, to output device 96, and/or control 84 can automatically adjust one or more operating parameters, such as, but not limited to, any or all of the speeds of infeed mechanism 36, separating system 38, beater 62, conveying mechanism 66, and/or chopper 68, for mitigating or clearing the condition, or allowing its removal.

Comparing air flow patterns (large white arrows) in discharge 112 of combine 20 in FIGS. 2 and 5, representative of a clear condition, and a plugged condition, respectively, it can be seen that a plug such as plug 102 in FIG. 5 will cause a diversion of normal air flow patterns, as well as at least some crop residue flow from flows B1 and 2, downwardly toward and through lower rear opening 70, thereby creating an increased pressure condition A1 in the region of sensor 100. Essentially, this can be summarized as a back pressure condition created as a result of limiting out flow paths for air through discharge 112.

Control 84 can be programmed to differentiate between ranges of pressures sensed under conditions represented by FIGS. 2 and 5, respectively, for determining existence of a plugging condition (FIG. 5), and also the onset of such a condition. Responsively, control 84 can output an appropriate signal to output device 96 to alert an operator who, in turn, can responsively take an appropriate action, such as, but not limited to, halting operation of combine 20 and manually clearing the plug, altering an operating condition of conveying mechanism 66, such as increasing a speed thereof, or reversing a direction of rotation thereof, or generally slowing the operation of one or more systems of the combine. Here, it should be noted that FIGS. 2 and 5 illustrate discharge 112 configured in a chopping mode, for delivering crop residue to chopper 68, and that a set or sets of pressure values can be stored and referred to by control 84 for determining onset or existence of a plugging condition in that configuration. Other sets of pressure condition information can be stored when discharge 112 is configured differently, for instance, for discharging crop residue through lower rear opening 70 without chopping, or by opening hood ceiling 76 for conveying crop residue from the rear of combine 20 in a windrow.

The operational steps described herein are performed by control 84 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the control 84 described herein are implemented in software code or instructions which are tangibly stored on a tangible computer readable medium. Upon loading and executing such software code or instructions by the control 84, the control 84 may perform any of the functionality of the control 84 described herein.

## Claims

1. An agricultural combine (20) comprising:
a body (22) having a plurality of interconnected walls defining a space (24) for receiving a stream of chaff from a separating system (38) of the combine (20); and
a cleaning system (52) disposed beneath the space (24), the cleaning system (52) including a sieve (56) mounted to a shoe (59);
wherein the agricultural combine (20) further comprises one or more air pressure sensors (100) fixedly mounted to the shoe (59), the one or more air pressure sensors (100) operable for sensing an air pressure condition both in the space (24) and across the sieve (56).

2. The agricultural combine (20) of claim 1, wherein the cleaning system further comprises a fan (54) disposed for directing a flow of air through the sieve (56).

3. The agricultural combine (20) of claim 1 or 2, wherein the shoe (59) is configured to oscillate forward and backward relative to the body (22).

4. The agricultural combine (20) of any of the preceding claims, wherein the agricultural combine further comprises a weed seed mill (71) having an inlet positioned in the space (24) for receiving a flow of crop residue from the cleaning system.

5. The agricultural combine (20) of claim 4, wherein the one or more air pressure sensors (100) are positioned adjacent to the sieve (56) and the weed seed mill (71).

6. The agricultural combine (20) of any of the preceding claims, wherein the one or more air pressure sensors (100) comprise two air pressure sensors (100), wherein one of the two air pressure sensors (100) is positioned at an elevation above the sieve (56) and the other of the two air pressure sensors (100) is positioned at an elevation below the sieve (56).

7. The agricultural combine (20) of claim 6, wherein the agricultural combine further comprises a control system (84) that is configured to compare pressure readings from the two air pressure sensors (100) and determine either the presence or absence of a blockage at the sieve (56) based upon the pressure readings from the two air pressure sensors (100).

8. The agricultural combine (20) of any of the preceding claims, wherein the shoe (59) is configured to oscillate forward and backward relative to the body (22), and the one or more air pressure sensors (100) are configured to move relative to the body (22).

9. The agricultural combine (20) of any of the preceding claims, wherein the agricultural combine further comprises a chopper (68) positioned at a rearward end of the space (24) and downstream of the separating system (38) for receiving the chaff stream from the separating system (38), and a weed seed mill (71) for receiving a flow of crop residue from the cleaning system (52), the weed seed mill (71) being positioned in the space (24) at a location that is upstream of the chopper (68).

10. An agricultural combine (20) comprising:
a body (22) having a plurality of interconnected walls defining a space (24) for receiving a stream of chaff from a separating system (38) of the combine;
a cleaning system (52) disposed beneath the space (24), the cleaning system including a fan (54) and a sieve (56) mounted to a moveable shoe (59);
wherein the agricultural combine further comprises:
two air pressure sensors (100) fixedly mounted to the shoe (59), the air pressure sensors (100) operable for sensing an air pressure condition in the space (24) and across the sieve (56), wherein one of the two air pressure sensors (100) is positioned at an elevation above the sieve (56) and the other of the two air pressure sensors (100) is positioned at an elevation below the sieve (56);
a weed seed mill (71) having an inlet positioned in the space (24) for receiving a flow of crop residue from the cleaning system (52); and
a control (84) that is configured to compare pressure readings from the two air pressure sensors (100) to determine (i) either the presence or absence of a blockage at the sieve (56) based upon the pressure readings from the two air pressure sensors (100), and (ii) the presence or absence of a blockage in the space (24) at a location downstream of the cleaning system (52).

11. The agricultural combine of claim 10, wherein the agricultural combine further comprises a conveyor mechanism (66) in a rear region of the space (24) in a position for receiving at least a portion of the chaff stream from a rotor (40) of the separating system (38) and conveying the received chaff stream into the chopper (68), the air pressure sensors (100) being operable for sensing an air pressure condition indicative of plugging of the conveyor mechanism (66).

12. The agricultural combine of claim 11, wherein the agricultural combine further comprises a control (84) for determining a speed of the conveyor mechanism, the control (84) being operable for determining existence of a plugging condition as a function at least in part of a sensed air pressure and a determined speed of the conveyor (66).

13. The agricultural combine of claim 10, wherein the agricultural combine further comprises a control (84) for determining a speed of the fan (54), the control (84) being operable for determining existence of a plugging condition as a function at least in part of a sensed air pressure and a determined speed of the fan (54).

14. The agricultural combine of claim 10, wherein the control (84) is programmable to store air pressure values sensed by each air pressure sensor (100), wherein the control (84) is programmable to differentiate between ranges of air pressure values for determining the onset of a plugging condition, wherein when a plugging condition as a function of the sensed air pressure has been determined to exist by the control (84), the control (84) is configured to automatically adjust at least one operating parameter in order to clear the plugging condition.
